# EUROPEAN PATENT SPECIFICATION

(11) **EP 0 860 114 B1**
(45) Date of publication and mention of the grant of the patent: **14.04.2004**
(21) Application number: 98300458.1
(22) Date of filing: 22.01.1998
(51) Int. Cl.: A01K 97/12

(54) **Bite indicating apparatus**
Bissanzeiger
Indicateur de touche

(30) Priority: 25.02.1997 GB 9703833
(43) Date of publication of application: 26.08.1998
(73) Proprietor: Fox Design International Limited, Chelmsford, Essex CM3 8HQ (GB)
(72) Inventor: Amato, Remo, Ilford, Essex, IG6 3UE (GB); Fox, Clifford Royston, Chelmsford, Essex, CM3 8HQ (GB)
(74) Representative: Crouch, David John

(56) References cited:
- EP-A- 0 570 117
- EP-A- 0 720 813
- EP-A- 0 749 687
- FR-A- 2 657 752
- GB-A- 2 274 761
- GB-A- 2 305 342
- GB-A- 2 313 281

## Description

The present invention relates to bite indicating apparatus having a fishing line movement sensor and an indicator signal generating circuit connected to the sensor to provide an indicator signal upon detection of line movement by the sensor, the indicator signal generating circuit being provided with an output connector to which a further bite indicating device is electrically connected in a releasable manner, in which the further device comprises an auxiliary bite-indicating arm which is pivotable at one end and which has line engagement means at its other end releasably connected to the line of a fishing rod when in use, that arm being provided with illumination means connected to the indicator signal generating circuit via the said connector.

As a result, the illuminating means on the arm are not only capable of being powered by the same power source as that used for the apparatus, but also the timing of the illumination thereof is determined by the indicator signal generating circuit of the apparatus. This avoids the need for an additional such power source and additional such circuit for the illuminating means on the arm.

GB-A-2,274,761 discloses a weight for providing visual indication of movement of a fishing line comprising a translucent main body, a connector for suspending the weight from the fishing line, and an electrically actuated light emitting device, such as an LED, mounted in the main body and connected to a switch controlled by a line movement detector. The switch is operated, and the weight illuminated, whenever any movement of the line is detected, thus allowing the direction of movement of the weight, and hence of the line, to be determined in the dark.

The present invention is directed to bite indicating apparatus having the construction. set out in the opening paragraph of the present specification, in which a different signal is issued by the indicator signal generating circuit, and hence to the said illumination means, in dependence upon the direction of line movement.

The said output connector may be in addition to a further output connector with which the apparatus may be provided, this further output connector being so constructed as to enable a readily releasable electrical connection to be made with a power source of the apparatus, for example a nine volt battery.

The indicator signal generating circuit may issue a continuous signal when the line movement is in one direction, and a pulsed signal when it is in the opposite direction.

Means for distinguishing between forward and rearward longitudinal movement of a line are disclosed in our co-pending application No. 9626824.8 filed on 24^{th} December 1996.

An example of bite indicating apparatus embodying the present invention is shown in the accompanying drawings in which:
- Figure 1: shows a block diagram of the electrical circuit of such apparatus; and
- Figure 2: show, on a larger scale, a circuit diagram of part of the circuit shown in Figure 1.

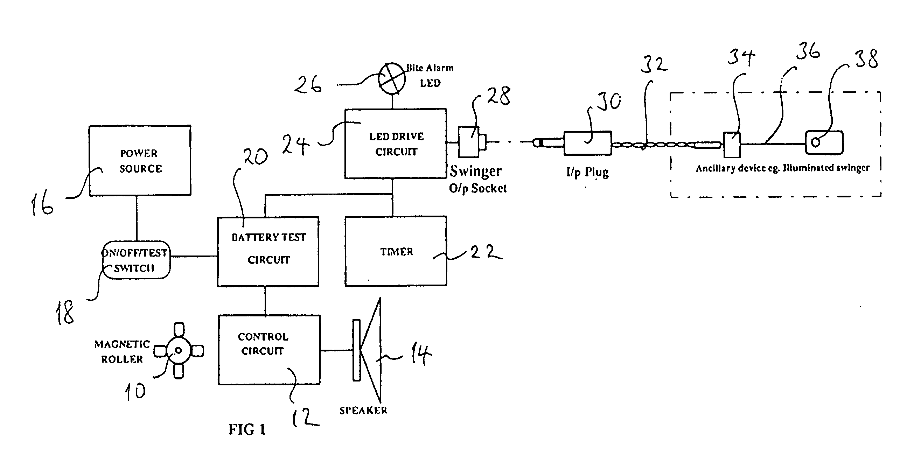

The bite indicating apparatus illustrated in Figure 1 comprises a magnetic roller 10 which is readily engageable and disengageable with a line of a fishing rod, and rotates in one or other direction in the event of forward and backward longitudinal movement of the line respectively. The apparatus further comprises a control circuit 12 which includes two reed relay switches (not shown) in the manner described in our co-pending application No. 9626824.8 filed on 24th December 1996. A buzzer or speaker 14 is connected to the control circuit 12 to issue an audible signal in dependence upon movement of the roller 10, the power for such a signal being derived from a power source 16 connected to the control circuit 12 via an on/off/test switch 18 and a battery test circuit 20.

An output from the battery test circuit 20 is connected to a counter or timer 22 which is also connected to provide a control signal to a drive circuit 24. The latter is connected to drive a light emitting diode 26 and also provide a drive signal to an output socket 28. It latches to the on condition for a predetermined duration, preferably 20 seconds, upon receipt of a pulse from control circuit when the latter is triggered by movement of the roller 10, and hence of the fishing line. A corresponding plug 30 which is readily engageable and disengageable with the socket 28 to effect an electrical connection therethrough, is connected via a lead 32, intermediate connector 34, and a line 36 to a light emitting diode 30 on the end of a pivotable arm (not shown) which swings up and/or down in dependence upon line movement.

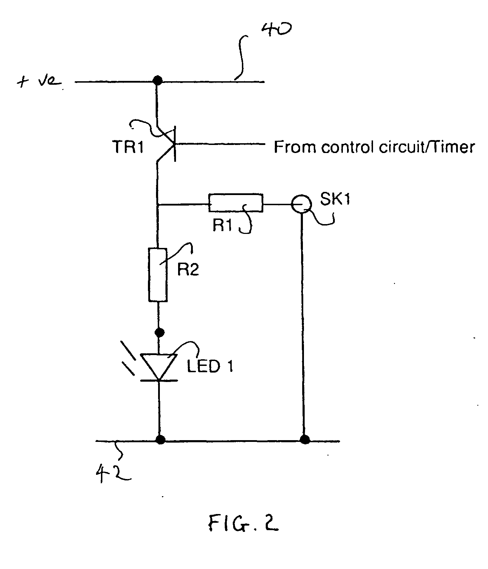

The drive circuit 24 is shown in greater detail in Figure 2, from which it can be seen that the circuit comprises a switching transistor TR1 which receives a signal from the combination of the control circuit 12 and the timer 32, a resistor R2 and a light emitting diode LED1 connected in that order in series with the transistor TR1 between a power line 40 and an earth line 42. In addition, a series circuit comprising a resistor R1 and the jack socket SK1 is connected in parallel with the resistor R2 and light emitting diode LED1 combination. This jack socket SK1 may be provided on the underside of a housing of the apparatus.

As described in our co-pending application No. 9626824.8, a different signal from the drive circuit 24 is issued in dependence upon whether the line moves in a longitudinally forward or a longitudinally rearward direction. For the former it generates a continuous signal, for example for a period of 20 seconds, for the latter it generates a pulsed signal for the same duration.

It will therefore be seen that when this apparatus is in use, a corresponding continuous or pulsed illumination of the light emitting diode 38 on the arm is obtained as well as at the light emitting diode 26, notwithstanding the difficulty that would otherwise be encountered in generating such an illumination signal on the arm were it not so coupled electrically with the drive circuit 24 of the apparatus.

Numerous variations and modifications to the illustrated circuity will readily occur to the reader of ordinary skill in the art without taking the resulting construction outside the scope of the invention defined by the appended claims.

## Claims

1. Bite indicating apparatus having a fishing line movement sensor (10, 12) and an indicator signal generating circuit (24) connected to the sensor (10, 12) to provide an indicator signal upon detection of line movement by the sensor (10, 12), the indicator signal generating circuit (24) being provided with an output connector (28) to which a further bite indicating device (38) is electrically connected in a releasable manner, in which the further device (38) comprises an auxiliary bite-indicating arm which is pivotable at one end and which has line engagement means at its other end releasably. connected to the line of a fishing rod when in use, that arm being provided with illumination means connected to the indicator signal generating circuit (24) via the said connector (28), **characterised in that** a different signal is issued by the indicator signal generating circuit (24), and hence to the said illumination means (38), in dependence upon the direction of line movement.

2. Apparatus according to claim 1, **characterised in that** the said output connector (28) is in addition to a further output connector with which the apparatus is provided, this further output connector being so constructed as to enable a readily releasable electrical connection to be made with a power source (16) of the apparatus.

3. Apparatus according to claim 2, **characterised in that** the power source (16) is a nine volt battery.

4. Apparatus according to any preceding claim, **characterised in that** the indicator signal generating circuit (24) issues a continuous signal when the line movement is in one direction, and a pulsed signal when it is in the opposite direction.

## Patentansprüche

1. Anbeißanzeigevorrichtung, die einen Angelschnur-Bewegungssensor (10, 12) und eine mit dem Sensor (10, 12) verbundene Anzeigesignal-Erzeugungsschaltung (24), die bei Erfassung einer Schnurbewegung durch den Sensor (10, 12) ein Anzeigesignal bereitstellt, besitzt, wobei die Anzeigesignal-Erzeugungsschaltung (24) mit einem Ausgangsverbinder (28) versehen ist, mit dem eine weitere Anbeißanzeigevorrichtung (38) lösbar elektrisch verbunden ist, wobei die weitere Vorrichtung (38) einen Hilfs-Anbeißanzeigearm umfasst, der an einem Ende angelenkt ist und an seinem anderen Ende eine Schnurverbindungseinrichtung besitzt, die mit der Schnur einer im Gebrauch befindlichen Angelrute lösbar verbunden ist, wobei dieser Arm mit einer Beleuchtungseinrichtung versehen ist, die über den Verbinder (28) mit der Anzeigesignal-Erzeugungsschaltung (24) verbunden ist, **dadurch gekennzeichnet, dass** von der Anzeigesignal-Erzeugungsschaltung (24) je nach Richtung der Schnurbewegung ein jeweils anderes Signal an die Beleuchtungseinrichtung (38) ausgegeben wird.

2. Vorrichtung nach Anspruch 1, **dadurch gekennzeichnet, dass** der Ausgangsverbinder (28) zusätzlich zu einem weiteren Ausgangsverbinder vorhanden ist, mit dem die Vorrichtung versehen ist, wobei dieser weitere Ausgangsverbinder so konstruiert ist, dass er eine einfach lösbare elektrische Verbindung, die mit einer Leistungsquelle (16) der Vorrichtung herzustellen ist, ermöglicht.

3. Vorrichtung nach Anspruch 2, **dadurch gekennzeichnet, dass** die Leistungsquelle (16) eine Neun-Volt-Batterie ist.

4. Vorrichtung nach einem vorhergehenden Anspruch, **dadurch gekennzeichnet, dass** die Anzeigesignal-Erzeugungsschaltung (24) ein Dauersignal ausgibt, wenn die Schnurbewegung in einer Richtung erfolgt, und ein Impulssignal ausgibt, wenn sie in der entgegengesetzten Richtung erfolgt.

## Revendications

1. Indicateur de touche, comprenant un capteur de déplacement de ligne de pêche (10, 12) et un circuit de génération de signal d'indicateur (24), relié au capteur (10, 12), pour produire un signal d'indicateur à la détection d'un déplacement de la ligne, détection effectuée par le capteur (10, 12), le circuit de génération de signal d'indicateur (24) étant muni d'un connecteur de sortie (28) auquel un autre dispositif d'indication de touche (38) est relié électriquement de manière désolidarisable, dans lequel l'autre dispositif (38) comprend un bras d'indication de touche auxiliaire, monté à pivotement à une extrémité et qui comprend des moyens de mise en contact de ligne à son autre extrémité, reliés de façon désolidarisable à la ligne d'une canne à pêche lorsqu'on est en utilisation, ledit bras étant muni de moyens d'éclairement, reliés au circuit de génération de signal d'indicateur (24) via ledit connecteur (28), **caractérisé en ce qu'**un signal différent est émis par le circuit de génération de signal d'indicateur (24) et, par conséquent, vers lesdits moyens d'éclairement (38), selon le sens de déplacement de la ligne.

2. Dispositif selon la revendication 1, **caractérisé en ce que** ledit connecteur de sortie (28) est monté en plus d'un autre connecteur de sortie, dont le dispositif est prévu, cet autre connecteur de sortie étant construit de manière à permettre d'établir une connexion électrique aisément désolidarisable avec une source de puissance (16) du dispositif.

3. Dispositif selon la revendication 2, **caractérisé en ce que** la source de puissance (16) est une batterie d'une tension de neuf Volts.

4. Dispositif selon l'une quelconque des revendications précédentes, **caractérisé en ce que** le circuit de génération de signal d'indicateur (24) émet un signal continu lorsque le dépassement de la ligne se fait dans un sens, et émet un signal pulsé lorsque le déplacement se fait dans le sens opposé.
